(19) Europäisches Patentamt

European Patent Office

Office européen des brevets

(11) **EP 0 952 683 A2**

(12) **EUROPEAN PATENT APPLICATION**

(43) Date of publication:
**27.10.1999 Bulletin 1999/43**

(51) Int Cl.⁶: **H04B 7/005**, H04M 1/72

(21) Application number: **99660062.3**

(22) Date of filing: **16.04.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.04.1998 FI 980868**

(71) Applicant: **NOKIA MOBILE PHONES LTD.**
**02150 Espoo (FI)**

(72) Inventors:
• **Jorri, Sakari**
  **00100 Helsinki (FI)**
• **Naskali, Matti**
  **21430 Yliskulma (FI)**

(74) Representative: **Brax, Matti Juhani et al**
**Berggren Oy Ab,**
**P.O. Box 16**
**00101 Helsinki (FI)**

(54) **Method to control the power consumption of a mobile station**

(57) The invention relates to a method for controlling the power consumption of a mobile station so that it is suitable for the power source, and to a mobile station, in which the maximum power consumption is set (5 to 9) by examining (2) the type of the power source by identifying a characteristic of at least one component which besides the power conductor pair is connected to the electrical interface of the power source and by setting (3 to 9) the maximum transmit power of the radio transmitter in accordance to the characteristics of the power source. The power source can be at least an accumulator, a battery or a battery eliminator.

FIGURE 1

EP 0 952 683 A2

Printed by Jouve, 75001 PARIS (FR)

## Description

The object of the invention is a method defined in the preamble of claim 1 for controlling the power consumption of a mobile station so that it is suitable for the power source, and a mobile station defined in the preamble of claim 9.

Batteries employ liquid and solid electrolytes, due to which there occurs a chemical reaction at the electrodes when the battery is connected in an electrical circuit. The electrodes are called anode and cathode. There is also known a so called side reaction occurring in the battery between the electrolyte and the electrodes which reduces the capacity of the battery. The type of the electrolyte as well as the structure and the material of the electrodes determine the characteristics of the battery.

The following rechargeable components or battery types are known: a capacitor, a lead battery, a nickel-cadmium (Ni-Cd) battery, a nickel-metal hybrid (Ni-MH) battery, and a lithium-ion battery. Their characteristics are different, for instance regarding the voltage between the electrodes, the energy density, and how a load affects their voltage.

The electrolyte of a battery is for instance a battery acid in a lead battery, or a gelatinous compound of a polymer and an organic solvent in for instance an lithium-ion battery. For instance polyacrylonitrile, polyethyleneoxide or different silicones are used as the polymer. For instance ethylene or propylene carbonate are used as organic solvents. However, the solvent the latter, the so called polymer battery will not at present withstand a voltage of even 5 V. The material of the battery electrodes is determined according to the name of the battery type.

## Table 1. Energy densities (Wh/l) of different battery types

The table 1 shows the maximum energy densities of different battery types, rechargeable components, using as units watt-hours per litre, Wh/l, which regarding smaller batteries is more advantageously replaced by the unit milliwatt-hours per cubic centimetre, $mWh/cm^3$.

Regarding its size, a capacitor which conventionally is not regarded as a battery, can store only a very small amount of energy, about 1.3 Wh/l. The most common true battery is the lead battery, which stores an energy of about 100 Wh/l, but due to its large size and weight it can be used only in large-sized applications, such as cars, vessels, etc. The energy density of a nickel-cadmium battery is clearly higher than the above mentioned, about 150 Wh/l. The energy density of a nickel-metal hybrid battery is about 25 % higher, being about 200 Wh/l. The energy density of a lithium-ion battery is the highest among known batteries, being about 275 Wh/l. These last mentioned three battery types are well suited for small-sized devices.

The battery voltage is at a maximum when the battery is not loaded. The effect of a load on the voltage in a nickel-cadmium battery is lower than in a nickel-metal hybrid battery or in a lithium-ion battery. Thus for a short time a nickel-cadmium battery can be loaded at a higher rate than the two last mentioned, which however have a higher energy density. For a nickel-cadmium battery and a nickel-metal hybrid battery the discharge characteristics presenting the voltage against time has a flatter form than that of a lithium-ion battery. Thus the voltage of the former will remain at a high level for a longer discharge period than the latter having a clearly sloping discharge characteristic.

The total capacity of a battery is of course determined as a function of the battery size and the energy density.

There are also known so called smart batteries which contain a data bus interface and logic in order to estimate for instance the charging condition and to control the recharging.

There is also known a mobile station which determines its transmit power according to whether the device is separated and operating with its own battery, or fixed in a bracket in a car and operating with the power of the car battery. In the latter case the battery of the mobile station is by-passed or recharged, but the operating voltage to the mobile station is supplied from the car battery.

Known mobile stations in the GSM system have been categorised in the following five classes according to their transmit power:

| class | max. power | type |
|-------|-----------|------|
| 1 | 20 W | portable or mounted in a vehicle |
| 2 | 8 W | portable or mounted in a vehicle |
| 3 | 5 W | hand-held telephone |
| 4 | 2 W | hand-held telephone |
| 5 | 0,8 W | hand-held telephone |

A problem in the known devices is that different power sources, such as batteries, can not be effectively used in the same mobile station, because the differing discharge characteristics of the power sources are not taken into account.

The object of the invention is to obviate the above mentioned disadvantages.

The method according to the invention is characterised in what is said in claim 1. The device according to the invention is characterised in what is said in claim 9. Preferred embodiments of the invention are presented in the dependent claims.

The invention relates to a method for controlling the power consumption of a mobile station so that it is suitable for the power source. According to the invention the power consumption is controlled by examining the type of the power source and by setting the maximum transmit power of the radio transmitter in accordance with the characteristics of the power source.

In one embodiment the type of the power source is examined by identifying a characteristic of at least one component which besides the power conductor pair is connected to the electrical interface of the power source. The characteristic of the component to be identified is most preferably an electrical parameter, such as the electrical resistance, but also other identifying means can be used, for instance mechanical switches.

The invention relates also to a mobile station in which the power consumption is controlled so that it is suitable for the power source. According to the invention it includes a transmitter for transmitting a radio transmission, an A/D converter for converting the characteristics of a component connected to the electrical interface of the power source into a form which is suitable for a processor, and a processor and a memory for identifying the type of the power source and for setting the maximum transmit power of the transmitter.

An advantage of the invention is that batteries with different characteristics can as such be effectively used in the same device.

The invention is described in detail below with reference to the enclosed drawing, in which

figure 1 shows in a flow diagram a method according to the invention for setting the power consumption in a mobile station;

figure 2 shows in a block diagram those components which are essential regarding the invention in a device according to the invention; and

figure 3 shows the basic drawing of a power connector used in the invention.

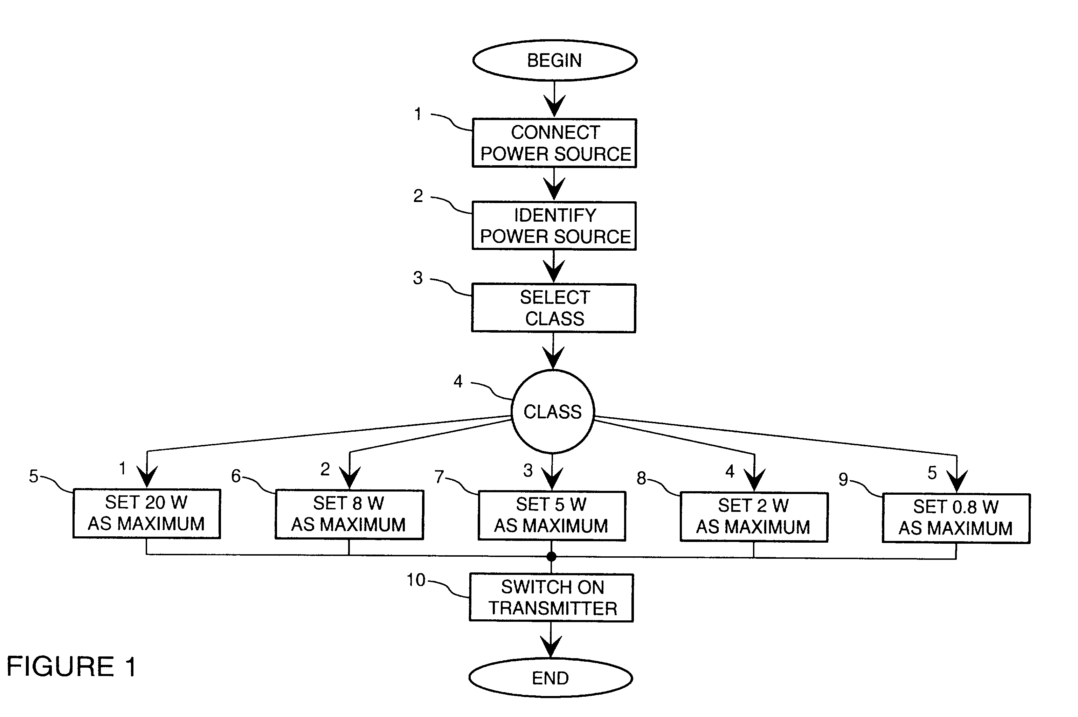

Figure 1 shows in a flow diagram a method according to the invention for setting the power consumption in a mobile station. A power source is connected 1 to the mobile station, the type of the power source in the mobile station is identified 2, and a transmitter power class is selected 3, 4 which is suitable for the power source. The maximum transmit power (20, 8, 5, 2 or 0.8 W) is set 5, 6, 7, 8, 9 according to the class (1 to 5). The power limit is most preferably determined by the power output capacity of the battery, the accumulator or the transformer. This depends for instance on the size of the power source, the charge capacity of the battery or accumulator, and the manufacturing technology. The transmitter is switched on 10 when the transmit power has been set.

The powers 20 to 2 W of the classes 1 to 4 are sufficient in rural areas, but the power 0.8 W of class 5 is sufficient only in a densely built-up area. The class division at the transmission moment is proportional to the required discharge current of the battery. The transmit power can also be adjusted within some limits around the normal power level. The invention is also applicable for other classifications which are not discussed here.

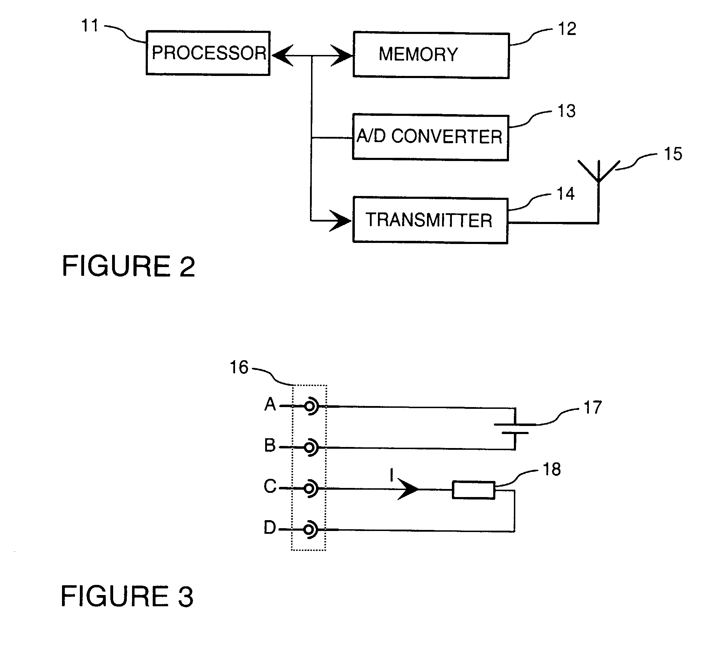

Figure 2 shows in a block diagram those components which are essential regarding the invention in a device according to the invention. The device includes a processor 11 and a memory 12 for identifying the type of the power source and for setting the maximum transmit power of the transmitter 14. The transmitter 14 and the antenna 15 are there for transmitting a radio transmission. The A/D converter 13 is there for converting the characteristics of a component connected to the power source connector into a form which is suitable for the processor. The A/D converter 13 produces a numerical value which is proportional, for instance to the voltage over a resistance, whereby the resistance $R = R_I + R_C$ is obtained by the generally known basic formula

$$R = \frac{U}{I} \tag{1}$$

when the bias voltage and the internal resistance of the measurement arrangement are known. A further derived formula

$$U_C = \frac{ER_C}{R_C + R_I} \tag{2}$$

provides the voltage $U_C$ over the component which is here measured with the A/D converter. E is the bias voltage, $R_I$ is the internal resistance of the measurement arrangement, and the $R_C$ is the resistance of the measured component. The resistance $R_C$ of the component can be solved by inverting the formula 2 as follows

$$R_C = \frac{U_C R_I}{E - U_C} \tag{3}$$

For the value of the resistance $R_C$ we can define for instance the following series to be used in the encoding: 0 Ω, 1 kΩ, 2.21 kΩ, 4.7 kΩ. The first resistance value 0 Ω means that the resistance is not connected but a shortcircuit is made, the other values are standard resistance values.

Figure 3 shows the basic drawing of a power connector used in the invention. The actual electrical interface, here the power connector 16, contains four conductors A, B, C and D. The power source 17 is connected to the power conductor pair A, B, and the component 18, most preferably a resistor, is connected to the conductor pair C, D.

Let us as an example examine the use of a Ni-MH battery and an Li-Ion battery as alternatives in the same mobile station. When a Ni-MH battery is connected to the mobile station the type of the battery is concluded by the mobile station on the basis of the value of the resistor 18, for instance 0 Ω, and a higher transmit power than with a Li-Ion battery is selected, because the Ni-MH battery is able to supply a higher current. When a Li-Ion battery is connected to the mobile station the type of the battery is concluded by the mobile station on the basis of the value of the resistor 18, for instance 1 kΩ, and a lower transmit power than with a Ni-MH battery is selected, for instance 0.8 W, because the Li-Ion battery is able to supply a lower current.

The mobile station calculates the battery voltage $U_A$ when it consumes the current $I_{MS}$. The battery has the internal resistance $R_A$. The voltage $U_{MS}$ supplied to the mobile station is calculated by the formula

$$U_{MS} = U_A - R_A * I_{MS} \tag{4}$$

The internal resistance $R_A$ increases as the battery grows older. The power $P_{MS}$ supplied to the mobile station is calculated by the formula

$$P_{MS} = U_{MS} * I_{MS} \tag{5}$$

where the current $I_{MS}$ is increased when the voltage $U_A$ of the battery decreases. Thus the loading resistance of the mobile station is not constant, but in practice the power $P_{MS}$ is almost totally used in the transmitter of the mobile station.

The invention is not limited only to the above presented embodiment examples, but many modifications are possible within the inventive idea defined in the claims. For example when the invention is used in a specific mobile telecommunications system the power classes of that system are used instead of the above mentioned ones.

## Claims

1. A method for controlling power consumption of a mobile station so that it is suitable for a power source, **characterised** in that the power consumption is controlled by examining (2) type of the power source and by setting (3-9) maximum transmit power of radio transmitter in accordance with characteristics of the power source.

2. A method according to claim 1, **characterised** in that the type of the power source is examined by identifying a characteristic of at least one component which besides the power conductor pair is connected to an electrical interface of the power source.

3. A method according to claim 2, **characterised** in that the characteristic of the component to be identified is electrical resistance.

4. A method according to claim 1, 2 or 3, **characterised** in that the power source is an accumulator.

5. A method according to claim 4, **characterised** in that the transmit power is set so that it is suitable regarding manufacturing technology of the accumulator.

6. A method according to claim 1, 2 or 3, **characterised** in that the power source is a battery.

7. A method according to claim 4, 5 or 6, **characterised** in that the transmit power is set according to charging capacity of the power source.

8. A method according to any previous claim 1 to 7, **characterised** in that that the transmit power is set according to current output capacity of the power source.

9. A method according to any previous claim 1 to 8, **characterised** in that the transmit power is set to one of the following power classes:

| class | power |
|-------|-------|
| 1 | 20 W |
| 2 | 8 W |
| 3 | 5 W |
| 4 | 2W |
| 5 | 0,8 W |

10. A mobile station, in which power consumption is controlled so that it is suitable for a power source, **characterised** in that it includes

   - a transmitter (14) for transmitting a radio transmission,
   - a processor (11) and a memory (12) for identifying type of the power source (17) and for setting maximum transmit power of a transmitter (14), and
   - an A/D converter (13) for converting characteristics of a component (18) connected to an electrical interface (16) of the power source (17) into a form which is suitable for the processor (11).

11. A mobile station according to claim 10, **characterised** in that the transmit power of the transmitter (14) can be set to one of the following power classes:

| class | power |
|-------|-------|
| 1 | 20 W |
| 2 | 8W |
| 3 | 5 W |
| 4 | 2W |
| 5 | 0,8 W |

FIGURE 1

EP 0 952 683 A2

FIGURE 2

FIGURE 3